# EUROPEAN PATENT APPLICATION

(11) **EP 4 439 879 A1**
(43) Date of publication of application: **02.10.2024**
(21) Application number: 23164607.6
(22) Date of filing: 28.03.2023
(51) Int. Cl.: H01S 3/23, H01S 3/00, H01S 3/10, H01S 3/13

(54) **HIGH ENERGY LASER PROCESSING SYSTEM**

(71) Applicant: NKT Photonics A/S, 3460 Birkerød (DK)
(72) Inventor: DEVINE, Adam Lee, Southampton, SO31 4RA (GB)
(74) Representative: Zacco Denmark A/S

(57) **Abstract**

A high energy laser processing system (100) comprising:
seed laser apparatus (110(1)-110(n)) configured to output seed laser signals having different wavelengths and having average optical powers in the range 800 W to 5 kW, each comprising:
an optical source (112) to provide a cw seed laser signal having a respective wavelength and a spectral linewidth in the range 15 to 250 GHz; and
an optical modulator (114) having a cw operating mode in which it is configured to transmit the cw seed laser signal and having a pulsed operating mode in which it is configured to apply amplitude modulation to output a pulsed seed laser signal of seed laser pulses;

optical beam combining apparatus (116) configured to combine cw seed laser signals into a cw combined laser signal and to combine pulsed seed laser signals into a pulsed combined laser signal; and
a controller (106) operative to transmit at least one control signal configured to cause the optical modulators to switch between operating in the pulsed operating mode and operating in the cw operating mode.

## Description

### Technical Field

The invention relates to a high energy laser processing system.

### Background

Lasers are used in many industries for laser processing of materials, including, for example, welding, cutting, marking, drilling, ablation, surface processing and additive manufacturing. Both continuous wave, cw, and pulsed lasers are used for laser processing of materials, for example, WO 2007/132182 A2 describes a pulsed laser for materials processing, and some lasers for materials processing are able to switch between cw and pulsed operation, for example the TRUMPF^{®} TruPulse nano fibre laser is able to switch between nanosecond pulsed and cw operation.

The pulse length used varies depending on the particular laser processing being performed and can range from picoseconds up to milliseconds, with hundreds of femtosecond, picosecond and nanosecond pulses being widely used. For both cw and pulsed operation, the average optical power that is required also varies depending on the particular laser processing being performed, cw lasers for materials processing typically generate cw average optical powers of up to 5 kW. Pulsed lasers for laser processing typically operate at average optical powers of 10's to hundreds of Watts, and lasers able to switch between cw and pulsed operation, such as the TRUMPF^{®} TruPulse nano, are limited to several hundred W maximum cw output power. A number of physical effects make further power scaling difficult including but not limited to stimulated Brillouin scattering (SBS), stimulated Raman scattering (SRS) and Kerr self-focussing.

To achieve higher cw laser optical powers for materials processing, spatial beam combining techniques are used to combine a number of laser beams to form higher energy cw laser beams. The resulting combined laser beam has a poor beam quality factor, M², but depending on the application, this is not generally considered to be an issue since the work piece undergoing the laser processing is typically less than 1.5 m from the laser output. Power scaling of fibre lasers can also be performed using coherent beam combining or spectral beam combining. Various methods of beam combining for fibre lasers are reported in the review paper Fathi, H., Närhi, M. and Gumenyuk, R., "Towards Ultimate High-Power Scaling: Coherent Beam Combining of Fiber Lasers", Photonics, 2021, 8, 566.

### Summary

It is an object to provide an improved high energy laser processing system.

An aspect provides a high energy laser processing system comprising a plurality of seed laser apparatus configured to output seed laser signals having different wavelengths and having average optical powers in the range 800 Wto 5 kW, optical beam combining apparatus and a controller. Each seed laser apparatus comprises an optical source and an optical modulator. The optical source is configured to provide a continuous wave, cw, seed laser signal having a respective wavelength and having a spectral linewidth in the range 15 to 250 GHz. The optical modulator is configurable to transmit laser signals without applying amplitude modulation or to apply amplitude modulation to laser signals. The optical modulator has a cw operating mode and a pulsed operating mode. In the cw operating mode, the optical modulator is configured to transmit the cw seed laser signal without applying amplitude modulation. In the pulsed operating mode, the optical modulator is configured to apply amplitude modulation to output a pulsed seed laser signal of seed laser pulses. The optical beam combining apparatus is configured to combine cw seed laser signals into a cw combined laser signal and to combine pulsed seed laser signals into a pulsed combined laser signal. The controller is operative to transmit at least one control signal configured to cause the optical modulators to switch between operating in the pulsed operating mode and operating in the cw operating mode.

The system enables switching between pulsed and cw operation, with power scaling of both cw and pulsed laser signals. Configuring the optical sources to provide seed laser signals having spectral linewidths in the range 15 to 250 GHz advantageously mitigates non-linear effects, including stimulated Brillouin scattering, SBS.

In an embodiment, each seed laser apparatus additionally comprises at least one optical amplifier configured to amplify seed laser signals to an average optical power in the range 800 Wto 5 kW. This enables a lower power optical source to be used and for optical modulators specified for lower power optical signals to be used.

In an embodiment, the cw combined laser signal has an average optical power of at least 10 kW. In an embodiment, the cw combined laser signal has an average optical power of up to 100 kW. The system enables power scaling to average optical powers which cannot be achieved using a single source and optical amplifier, while maintaining good beam quality.

In an embodiment, the optical modulator and the at least one optical amplifier are configured to provide seed laser pulses having a peak pulse energy in the range 0.5 mJ and 10 mJ. The system enables power scaling to peak pulse energies which cannot be achieved using a single source and optical amplifier.

In an embodiment, the pulsed combined laser signal has a peak pulse energy of at least 20 mJ. In an embodiment, the pulsed combined laser signal has a peak pulse energy of up to 100 mJ. The system enables power scaling to peak pulse energies which cannot be achieved using a single source and optical amplifier.

In an embodiment, the optical source comprises a single frequency laser and a phase modulator. The single frequency laser is configured to generate a single frequency cw laser signal having a spectral linewidth of up to 20kHz. The phase modulator is operative to apply phase modulation to increase the spectral linewidth to up to 120 GHz. Broadening the linewidth of a single frequency cw laser signal using a phase modulator advantageously enables a laser signal to be provided that has an accurately controllable linewidth whilst maintaining the benefits of the low relative intensity noise (RIN) of single frequency lasers to mitigate nonlinear effect, including SBS.

In an embodiment, the phase modulator is operative to apply phase modulation to the single frequency cw laser signal to increase the spectral linewidth to up to 120 GHz to form a cw seed laser signal. The optical modulator is provided after the phase modulator. The optical modulator is configured, in the cw operating mode, to transmit the cw seed laser signal without applying amplitude modulation. The optical modulator is configured, in the pulsed operating mode, to apply amplitude modulation to the cw seed laser signal received from the phase modulator to form a pulsed seed laser signal.

In an embodiment, the optical modulator is provided between the single frequency laser and the phase modulator. The optical modulator is configured, in the cw operating mode, to transmit the single frequency cw laser signal without applying amplitude modulation. The optical modulator is configured, in the pulsed operating mode, to apply amplitude modulation to the single frequency cw laser signal to form a single frequency pulsed laser signal. The phase modulator is operative to apply phase modulation to increase the spectral linewidth of the single frequency cw laser signal to up to 120 GHz to form a cw seed laser signal. The phase modulator is further operative to apply phase modulation to increase the spectral linewidth of the single frequency pulsed laser signal to up to 120 GHz to form a pulsed seed laser signal.

In an embodiment, the single frequency laser is a fibre laser.

In an embodiment, the single frequency cw laser signal has a spectral linewidth of up to 10 kHz. In an embodiment, the single frequency cw laser signal has a spectral linewidth of up to 1 kHz. In an embodiment, the single frequency cw laser signal has a spectral linewidth of up to 500 Hz. Broadening a very narrow linewidth single frequency cw laser signal using a phase modulator advantageously enables a cw laser signal to be provided that has an accurately controllable linewidth to mitigate SBS, with minimal impact on the laser intensity noise.

In an embodiment, the optical source comprises a grating-based fiber laser oscillator configured to generate a cw seed laser signal having a spectral linewidth of up to 120 GHz. Use of a grating-based fibre laser oscillator enables a cw laser signal having a desired spectral linewidth to mitigate SBS to be directly generated.

In an embodiment, the optical source comprises a laser diode configured to generate a cw seed laser signal having a spectral linewidth in the range 15 to 250 GHz. Use of a laser diode enables a cw laser signal having a desired spectral linewidth to mitigate SBS to be directly generated.

In an embodiment, the laser diode is one of a fibre Bragg grating locked laser diode or a Fabry-Perot laser diode.

In an embodiment, the seed laser pulses are nanosecond pulses. This advantageously keeps the peak power low enough to mitigate nonlinear effects, including stimulated Rayleigh scattering, SRS, within the at least one optical amplifier.

In an embodiment, the seed laser pulses have a pulse duration in the range 1 ns to 2000 ns. This advantageously keeps peak pulse power low enough to mitigate non-linear effects, such as stimulated Rayleigh scattering, enabling mJ pulse energies to be achieved.

In an embodiment, the seed laser pulses have a pulse repetition rate in the range 1 MHz to 100 MHz.

In an embodiment, the optical modulator is a semiconductor optical amplifier.

In an embodiment, the semiconductor optical amplifier is additionally configured, in the cw operating mode, to amplify the cw seed laser signal. Use of a semiconductor optical amplifier, SOA, enables the optical modulator to both amplitude modulate the cw laser signal to form a pulse laser signal and to amplify the cw laser signal.

In an embodiment, the semiconductor optical amplifier is configured to amplify the cw seed laser signal to an optical power of up to 1 W. In an embodiment, the semiconductor optical amplifier is configured to amplify the cw seed laser signal to an optical power of up to 500 mW. In an embodiment, the semiconductor optical amplifier is configured to amplify the cw seed laser signal to an optical power of up to 300 mW. In an embodiment, the semiconductor optical amplifier is configured to amplify the cw seed laser signal to an optical power of up to 200 mW. In an embodiment, the semiconductor optical amplifier is configured to amplify the cw seed laser signal to an optical power of up to 100 mW.

In an embodiment, the semiconductor optical amplifier is additionally configured, in the pulsed operating mode, to amplify the seed laser pulses. Use of a semiconductor optical amplifier, SOA, enables the optical modulator to amplify at the same time as amplitude modulating the cw laser signal to form a pulsed laser signal.

In an embodiment, the semiconductor optical amplifier is configured to amplify the seed laser pulses to an average optical power in the range 1 mW to 250 mW.

In an embodiment, the optical modulator is one of an acousto-optic modulator, AOM, an electroabsorption modulator, EAM, a booster optical amplifier, BOA, or an optical switch, such as a micro-electromechanical switch.

In an embodiment, the optical beam combining apparatus is spectral beam combining apparatus. The system has a respective optical path length from the optical modulator of each seed laser apparatus to the optical beam combining apparatus. The optical path lengths match to within 50 mm. This may advantageously ensure that seed laser pulses of different pulsed seed laser signals are temporally overlapping so that combined pulses of the pulsed combined laser signal have a maximum spread in time of around 0.25 ns.

In an embodiment, the controller comprises interface circuitry, a processor and a memory. The memory contains instructions executable by the processor whereby the controller is operative to transmit the at least one control signal to the optical modulators.

In an embodiment, the controller is operative to transmit a first control signal and to transmit a second control signal. The first control signal is configured to cause the optical modulators to be configured in the pulsed operating mode. The second control signal is configured to cause the optical modulators to be configured in the cw operating mode. The controller is operative to switch between transmitting the first control signal and the second control signal according to a pre-set switching pattern stored in the memory. This may enable the system to output a combination of laser pulses and cw laser light optimized for a specific material processing application.

In an embodiment, the controller is further operative to transmit at least one control signal in response to receiving an external trigger signal. This may enable switching between cw and pulse operating modes to be triggered by an external system, such as a materials processing feedback sensor measuring the position of the piece under process.

In an embodiment, the controller is further operative to transmit at least one modulation timing control signal to the optical modulators. At least one modulation timing signal is configured to cause the optical modulators to synchronously apply amplitude modulation. This may further ensure that seed laser pulses of different pulsed seed laser signals are temporally overlapping.

### Brief Description of the drawings

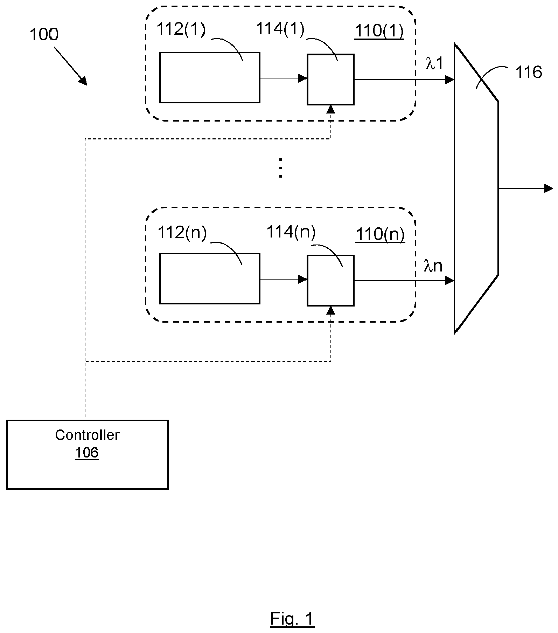

Figures 1 to 11 are block diagrams illustrating embodiments of high energy laser processing systems.

### Detailed description

Referring to Figure 1, an embodiment provides a high energy laser processing system 100 comprising a plurality, n, of seed laser apparatus 110(1) - 110(n) configured to output seed laser signals having different wavelengths and having average optical powers in the range 800 W to 5 kW, optical beam combining apparatus 116 and a controller 106. Each seed laser apparatus 110(1) to 110(n) is configured to output a respective seed laser signal at a different wavelength, λ1 to λn.

Each seed laser apparatus 110 comprises an optical source 112 and an optical modulator 114. Each optical source 112 is configured to provide a continuous wave, cw, seed laser signal, at its respective wavelength, having a spectral linewidth in the range 15 to 250 GHz. The optical modulator 114 is configurable to transmit laser signals without applying amplitude modulation or to apply amplitude modulation to laser signals. The optical modulator has a cw operating mode and a pulsed operating mode. In the cw operating mode, the optical modulator is configured to transmit the cw seed laser signal. In the pulsed operating mode, the optical modulator is configured to apply amplitude modulation to output a pulsed seed laser signal of seed laser pulses.

The optical beam combining apparatus 116 is configured to combine cw seed laser signals into a cw combined laser signal and to combine pulsed seed laser signals into a pulsed combined laser signal.

The controller 106 is operative to transmit at least one control signal configured to cause the optical modulators 114(1) to 114(n) to switch between operating the pulsed operating mode and operating in the cw operating mode.

In an embodiment, the optical source 112 comprises a grating-based fibre laser oscillator configured to generate a cw seed laser signal having a spectral linewidth of up to 120 GHz.

In a further embodiment, the optical source 112 comprises a laser diode configured to generate a cw seed laser signal having a spectral linewidth in the range 15 to 250 GHz, equivalent to a full width half maximum, FWHM, linewidth of approximately 50 pm to 1 nm at a seed laser wavelength of 1 µm.

The laser diode may be a fibre Bragg grating locked laser diode or a Fabry-Perot laser diode.

In an embodiment, the seed laser pulses are nanosecond pulses.

In an embodiment, the seed laser pulses have a pulse duration in the range 1 ns to 2000 ns.

In an embodiment, the seed laser pulses have a pulse repetition rate in the range 1 MHz to 100 MHz.

In an embodiment, the optical modulator 114 is a semiconductor optical amplifier, SOA. The optical modulator 114 may alternatively be an acousto-optic modulator, AOM, an electroabsorption modulator, EAM, a booster optical amplifier, BOA, or an optical switch, such as a micro-electromechanical switch.

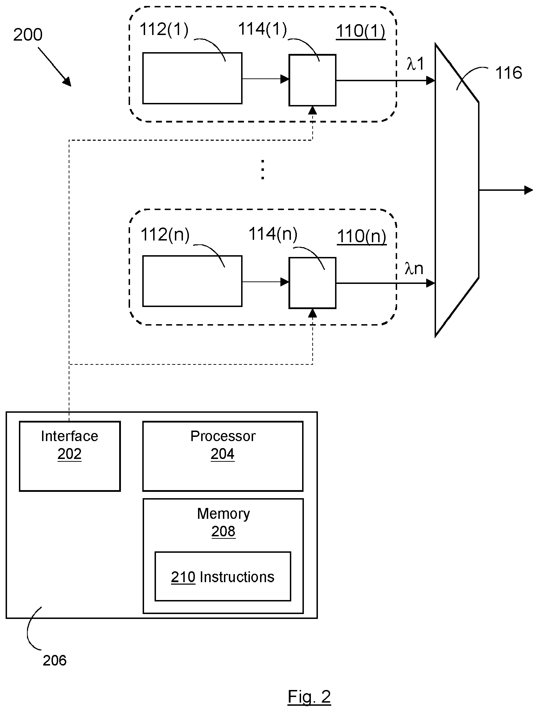

Referring to Figure 2, an embodiment provides a high energy laser processing system 200 comprising a plurality of seed laser apparatus 110 configured to output seed laser signals having different wavelengths and having average optical powers in the range 800 W to 5 kW, optical beam combining apparatus 116 and a controller 206.

The controller 206 comprises interface circuitry 202, a processor 204 and a memory 208. The memory contains instructions 210 executable by the processor whereby the controller is operative to transmit the at least one control signal to the optical modulators 114.

In an embodiment, the controller 206 is operative to transmit a first control signal and to transmit a second control signal. The first control signal is configured to cause the optical modulators 114 to be configured in the pulsed operating mode. The second control signal is configured to cause the optical modulators to be configured in the cw operating mode. The controller is operative to switch between transmitting the first control signal and the second control signal according to a pre-set switching pattern stored in the memory.

In an embodiment, the controller 206 is further operative to transmit the first control signal and/or the second control signal in response to receiving an external trigger signal.

In an embodiment, the controller 206 is further operative to transmit at least one modulation timing control signal configured to cause the optical modulators 114 to synchronously apply amplitude modulation.

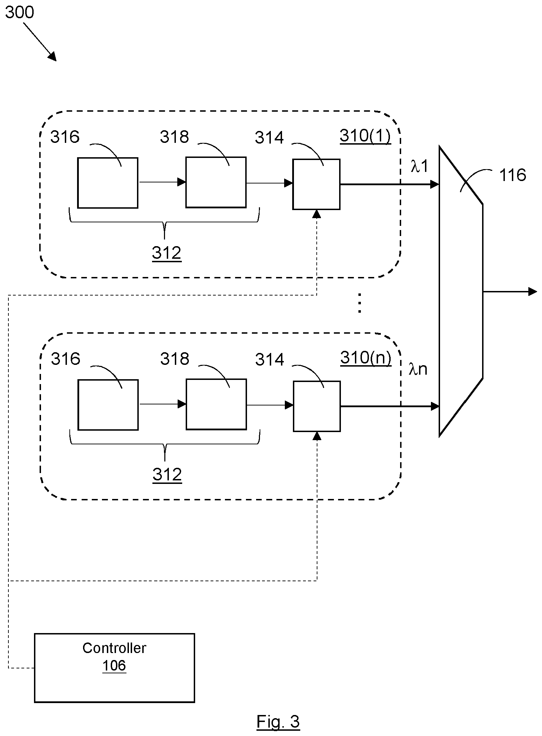

Referring to Figure 3, an embodiment provides a high energy laser processing system 300 comprising a plurality of seed laser apparatus 310(1) to 310(n) configured to output seed laser signals having different wavelengths and having average optical powers in the range 800 Wto 5 kW, optical beam combining apparatus 116 and a controller 106. Each seed laser apparatus 310(1) to 310(n) is configured to output a respective seed laser signal at a different wavelength, λ1 to λn.

Each seed laser apparatus 310 comprises an optical source 312 and an optical modulator 314. The optical source 312 comprises a single frequency laser 316 and a phase modulator 318. The single frequency laser 316 is configured to generate a single frequency cw laser signal, at its respective wavelength, having a spectral linewidth of up to 20kHz. The phase modulator 318 is operative to apply phase modulation to the single frequency cw laser signal to increase the spectral linewidth to up to 120 GHz to form a cw seed laser signal. The optical modulator 314 is provided after the phase modulator. The optical modulator is configured, in the cw operating mode, to transmit the cw seed laser signal without applying amplitude modulation. The optical modulator is configured, in the pulsed operating mode, to apply amplitude modulation to the cw seed laser signal received from the phase modulator to form a pulsed seed laser signal.

It will be understood that a controller 206 as described above may alternatively be used.

In an embodiment, the single frequency cw laser signal has a spectral linewidth of up to 10 kHz.

In an example, the single frequency laser 316 is a Ytterbium-doped fibre laser having wavelength within an operating range of 1030-1120 nm, a spectral linewidth of up to 10 kHz, and at least 10 mW optical power. The Ytterbium-doped fibre laser may for example be a NKT Photonics ^{®} Koheras BASIK Y10 Ytterbium fibre laser having a wavelength of 1064 nm, at least 10 mW output power and a spectral linewidth (full width half maximum, FWHM) of 10 kHz.

In an embodiment, the single frequency cw laser signal has a spectral linewidth of up to 1 kHz.

In an embodiment, the single frequency cw laser signal has a spectral linewidth of up to 500 Hz.

In an embodiment, the single frequency laser 316 is a fibre laser.

In an example, the single frequency laser 316 is an Erbium-doped fibre laser having a wavelength within an operating range of 1535-1580 nm, a spectral linewidth as low as 200 Hz, and 30-40 mW optical power. The Erbium-doped fibre laser may for example be a NKT Photonics ^{®} Koheras BASIK E15 Erbium fibre laser having a wavelength of 1550.12 nm, 40 mW output power and a spectral linewidth (full width half maximum, FWHM) of 200 Hz.

In an embodiment, the optical modulator 314 is a semiconductor optical amplifier, SOA.

In an embodiment, the SOA 314 is additionally configured, in the cw operating mode, to amplify the cw seed laser signal.

In an embodiment, the SOA 314 is configured to amplify the cw seed laser signal to an optical power of up to 1 W.

The SOA 314 may be configured to amplify the cw seed laser signal to an optical power of up to 500 mW. The SOA 314 may be configured to amplify the cw seed laser signal to an optical power of up to 300 mW. The SOA 314 may be configured to amplify the cw seed laser signal to an optical power of up to 200 mW. The SOA 314 may be configured to amplify the cw seed laser signal to an optical power of up to 100 mW.

In an embodiment, the SOA 314 is additionally configured, in the pulsed operating mode, to amplify at the same time as applying amplitude modulation to the cw seed laser signal received from the phase modulator to form a pulsed seed laser signal, thereby amplifying the seed laser pulses.

In an embodiment, the SOA 314 is configured, in the pulsed operating mode, to amplify the cw seed laser signal received from the phase modulator so that the seed laser pulses are amplified to an average optical power in the range 1 mW to 250 mW.

In a further embodiment, the optical modulator 314 is an AOM, or an EAM, or a BOA, or an optical switch, such as a micro-electromechanical switch.

In an embodiment, the seed laser pulses are nanosecond pulses.

In an embodiment, the seed laser pulses have a pulse duration in the range 1 ns to 2000 ns.

In an embodiment, the seed laser pulses have a pulse repetition rate in the range 1 MHz to 100 MHz.

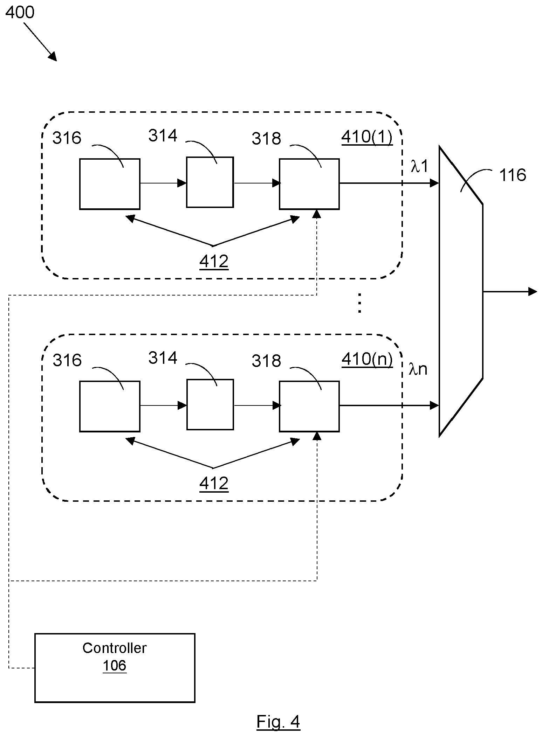

Referring to Figure 4, an embodiment provides a high energy laser processing system 400 comprising a plurality of seed laser apparatus 410(1) to 410(n) configured to output seed laser signals having different wavelengths and having average optical powers in the range 800 Wto 5 kW, optical beam combining apparatus 116 and a controller 106. Each seed laser apparatus 410(1) to 410(n) is configured to output a respective seed laser signal at a different wavelength, λ1 to λn.

Each seed laser apparatus 410 comprises an optical source 412 and an optical modulator 314. The optical source 412 comprises a single frequency laser 316 and a phase modulator 318. The optical modulator 314 is provided between the single frequency laser 316 and the phase modulator 318.

The single frequency laser 316 is configured to generate a single frequency cw laser signal, at its respective wavelength, having a spectral linewidth of up to 20kHz.

The optical modulator 314 is configured, in the cw operating mode, to transmit the single frequency cw laser signal without applying amplitude modulation. The phase modulator 318 is operative to apply phase modulation to increase the spectral linewidth of the single frequency cw laser signal to up to 120 GHz to form a cw seed laser signal. The optical modulator 314 is configured, in the pulsed operating mode, to apply amplitude modulation to the single frequency cw laser signal to form a single frequency pulsed laser signal. The phase modulator 318 is further operative to apply phase modulation to the single frequency pulsed laser signal to increase the spectral linewidth of the single frequency pulsed laser signal to up to 120 GHz to form a pulsed seed laser signal of seed laser pulses.

It will be understood that a controller 206 as described above may alternatively be used.

In an embodiment, the single frequency cw laser signal has a spectral linewidth of up to 10 kHz.

In an example, the single frequency laser 316 is a Ytterbium-doped fibre laser having a wavelength within an operating range of 1030-1120 nm, a spectral linewidth of up to 10 kHz, and at least 10 mW optical power. The Ytterbium-doped fibre laser may for example be a NKT Photonics ^{®} Koheras BASIK Y10 Ytterbium fibre laser having a wavelength of 1064 nm, at least 10 mW output power and a spectral linewidth (full width half maximum, FWHM) of 10 kHz.

In an embodiment, the single frequency cw laser signal has a spectral linewidth of up to 1 kHz.

In an embodiment, the single frequency cw laser signal has a spectral linewidth of up to 500 Hz.

In an embodiment, the single frequency laser 316 is a fibre laser.

In an example, the single frequency laser 316 is an Erbium-doped fibre laser having a wavelength within an operating range of 1535-1580 nm, a spectral linewidth as low as 200 Hz, and 30-40 mW optical power. The Erbium-doped fibre laser may for example be a NKT Photonics ^{®} Koheras BASIK E15 Erbium fibre laser having a wavelength of 1550.12 nm, 40 mW output power and a spectral linewidth (full width half maximum, FWHM) of 200 Hz.

In an embodiment, the optical modulator 314 is a semiconductor optical amplifier, SOA.

In an embodiment, the SOA 314 is additionally configured to amplify the single frequency cw laser signal.

In an embodiment, the SOA 314 is configured to amplify the single frequency cw laser signal to an optical power of up to 1 W.

The SOA 314 may be configured to amplify the single frequency cw laser signal to an optical power of up to 500 mW. The SOA 314 may be configured to amplify the single frequency cw laser signal to an optical power of up to 300 mW. The SOA 314 may be configured to amplify the single frequency cw laser signal to an optical power of up to 200 mW. The SOA 314 may be configured to amplify the single frequency cw laser signal to an optical power of up to 100 mW.

In a further embodiment, the optical modulator 314 is an AOM, or an EAM, or a BOA, or an optical switch, such as a micro-electromechanical switch.

In an embodiment, the seed laser pulses are nanosecond pulses.

In an embodiment, the seed laser pulses have a pulse duration in the range 1 ns to 2000 ns.

In an embodiment, the seed laser pulses have a pulse repetition rate in the range 1 MHz to 100 MHz.

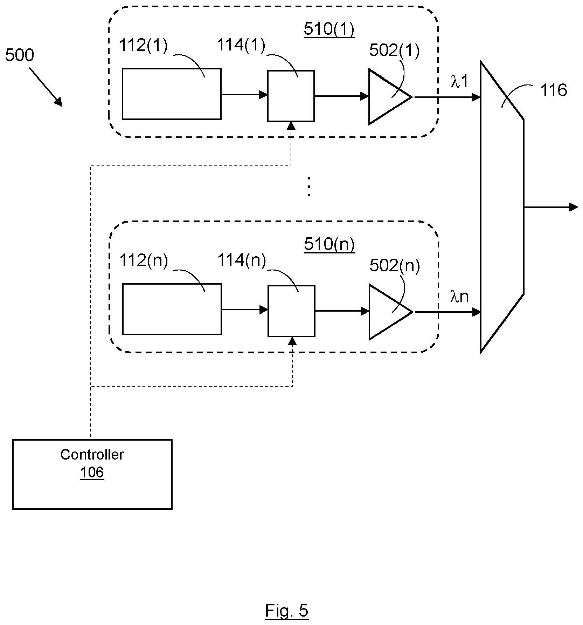

Figure 5 illustrates an embodiment of a high energy laser processing system 500 comprising a plurality of seed laser apparatus 510(1) to 510(n) configured to output seed laser signals having different wavelengths and having average optical powers in the range 800 W to 5 kW, optical beam combining apparatus 116 and a controller 106. Each seed laser apparatus 510(1) to 510(n) is configured to output a respective seed laser signal at a different wavelength, λ1 to λn.

Each seed laser apparatus 510 comprises an optical source 112, an optical modulator 114, and an optical amplifier 502. A single optical amplifier is illustrated but it will be understood by the skilled person that a series of optical amplifiers may alternatively be used.

The optical amplifier 502, or series of optical amplifiers, is configured to amplify seed laser signals to an average optical power in the range 800 Wto 5 kW.

The optical amplifier 502 may, for example, be an optical fibre amplifier or may be a solid state amplifier.

It will be understood that a controller 206 as described above may alternatively be used.

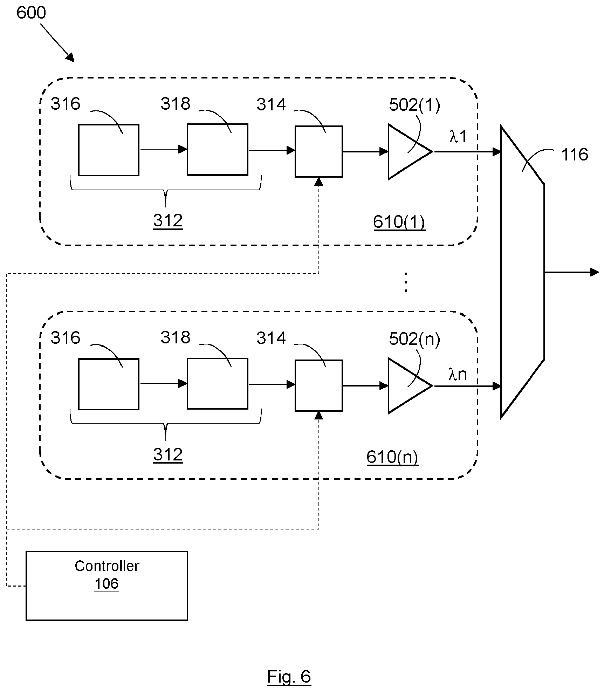

Referring to Figure 6, an embodiment provides a high energy laser processing system 600 comprising a plurality of seed laser apparatus 610(1) to 610(n) configured to output seed laser signals having different wavelengths and having average optical powers in the range 800 Wto 5 kW, optical beam combining apparatus 116 and a controller 106. Each seed laser apparatus 610(1) to 610(n) is configured to output a respective seed laser signal at a different wavelength, λ1 to λn.

As described above with reference to Figure 3, each seed laser apparatus 610 comprises an optical source 312 and an optical modulator 314. Each optical source 312 comprises a single frequency laser 316 and a phase modulator 318, with the optical modulator provided after the phase modulator. Each seed laser apparatus 610 additionally comprises an optical amplifier 502. A single optical amplifier is illustrated but it will be understood by the skilled person that a series of optical amplifiers may alternatively be used.

The optical amplifier, or series of optical amplifiers, is configured to amplify seed laser signals to an average optical power in the range 800 W to 5 kW.

The or each optical amplifier 502 may, for example, be a optical fibre amplifier or may be a solid state amplifier.

It will be understood that a controller 206 as described above may alternatively be used.

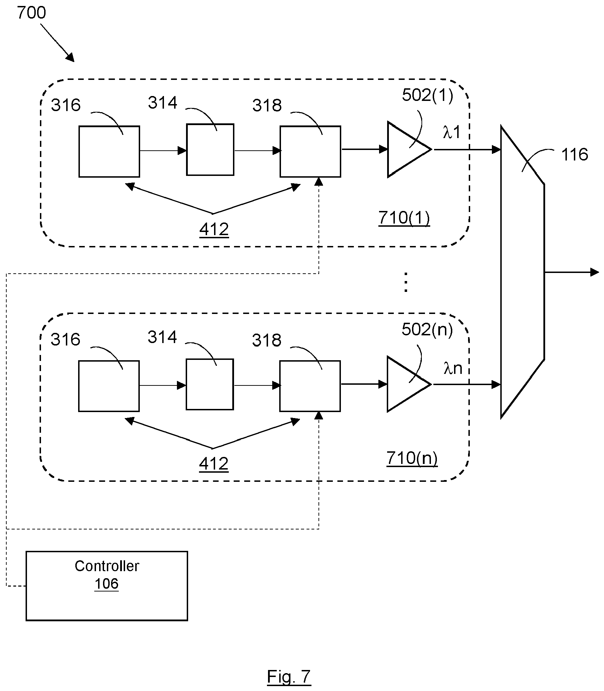

Referring to Figure 7, an embodiment provides a high energy laser processing system 700 comprising a plurality of seed laser apparatus 710(1) to 710(n) configured to output seed laser signals having different wavelengths and having average optical powers in the range 800 Wto 5 kW, optical beam combining apparatus 116 and a controller 106. Each seed laser apparatus 710(1) to 710(n) is configured to output a respective seed laser signal at a different wavelength, λ1 to λn.

As described above with reference to Figure 4, each seed laser apparatus 710 comprises an optical source 412 and an optical modulator 314. Each optical source comprises a single frequency laser 316 and a phase modulator 318, with the optical modulator provided between the single frequency laser and the phase modulator. Each seed laser apparatus 710 additionally comprises an optical amplifier 502. A single optical amplifier is illustrated but it will be understood by the skilled person that a series of optical amplifiers may alternatively be used.

The optical amplifier, or series of optical amplifiers, is configured to amplify seed laser signals to an average optical power in the range 800 Wto 5 kW.

The optical amplifier 502 may, for example, be a optical fibre amplifier or may be a solid state amplifier.

It will be understood that a controller 206 as described above may alternatively be used.

In an embodiment, for each seed laser apparatus 510, 610, 710 the optical modulator 114 and the at least one optical amplifier 502 are configured to provide seed laser pulses having a peak pulse energy in the range 0.5 mJ and 10 mJ.

In an embodiment, the pulsed combined laser signal has a peak pulse energy of at least 20 mJ. In an embodiment, the pulsed combined laser signal has a peak pulse energy of up to 100 mJ.

In an embodiment, the cw combined laser signal has an average optical power of at least 10 kW. To achieve an average optical power of 10 kW, the high energy laser processing systems 500, 600, 700 may, for example, be configured with 5 seed laser apparatus 510, 610, 710 each configured to output seed laser signals having an average optical power of 2 kW, or 10 seed laser apparatus 510, 610, 710 each configured to output seed laser signals having an average optical power of 1 kW. It will be appreciated that other additive combinations of average optical power and number of seed laser apparatus may alternatively be used to achieve a combined laser signal having an average signal power of 10 kW.

In an embodiment, the combined laser signal has an average optical power of up to 100 kW. To achieve an average optical power of 100 kW, the high energy laser processing systems 500, 600, 700 may, for example, be configured with 20 seed laser apparatus 510, 610, 710 each configured to output seed laser signals having an average optical power of 5 kW, or 50 seed laser apparatus 510, 610, 710 each configured to output seed laser signals having an average optical power of 2 kW. It will be appreciated that other additive combinations of average optical power and number of seed laser apparatus may alternatively be used to achieve a combined laser signal having an average signal power of up to 100 kW.

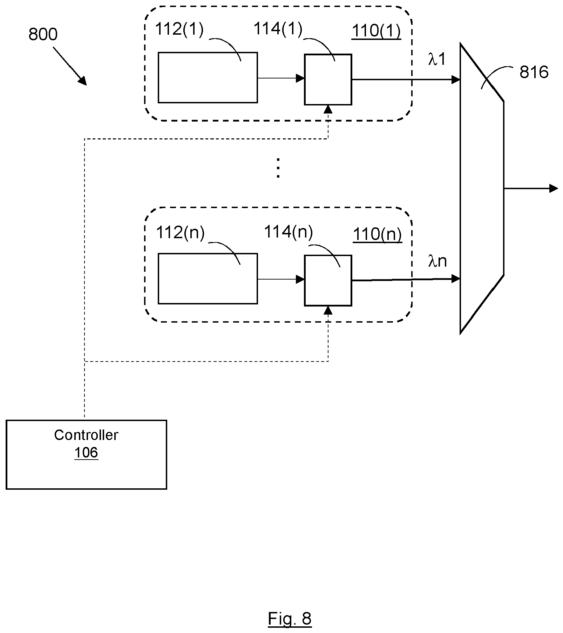

Referring to Figure 8, an embodiment provides a high energy laser processing system 800 comprising a plurality of seed laser apparatus 110(1) to 110(n) configured to output seed laser signals having different wavelengths and having average optical powers in the range 800 Wto 5 kW, optical beam combining apparatus 816 and a controller 106.

Each seed laser apparatus 110(1) to 110(n) is configured to output respective seed laser signals at a different wavelength, λ1 to λn.

It will also be understood that a controller 206 as described above may alternatively be used.

The optical beam combining apparatus 816 is spectral beam combining apparatus. The spectral beam combing apparatus may comprise a grating based spectral beam combiner or a dichroic mirror based spectral beam combiner. Spectral beam combining is a technique that will be well know to the skilled person, as described, for example in Fathi, H., Närhi, M. and Gumenyuk, R., "Towards Ultimate High-Power Scaling: Coherent Beam Combining of Fiber Lasers", Photonics, 2021, 8, 566.

The system has respective optical path lengths from the optical modulator 114 of each seed laser apparatus 110 to the spectral beam combining apparatus 816. The optical path length from each optical modulator to the spectral beam combining apparatus 816 is the same to within 50 mm, that is to say the optical path lengths match to within 50 mm. This ensures that in pulsed operation, i.e. when the seed laser apparatus 110 are generating pulsed seed laser signals, the seed laser pulses forming each combined pulse of the pulsed combined laser signal temporally overlap, with a maximum spread in time of approximately 0.25 ns. This ensures that the seed laser pulses forming each combined pulse will remain temporally overlapped at the materials processing target, even for 1 ns seed laser pulses.

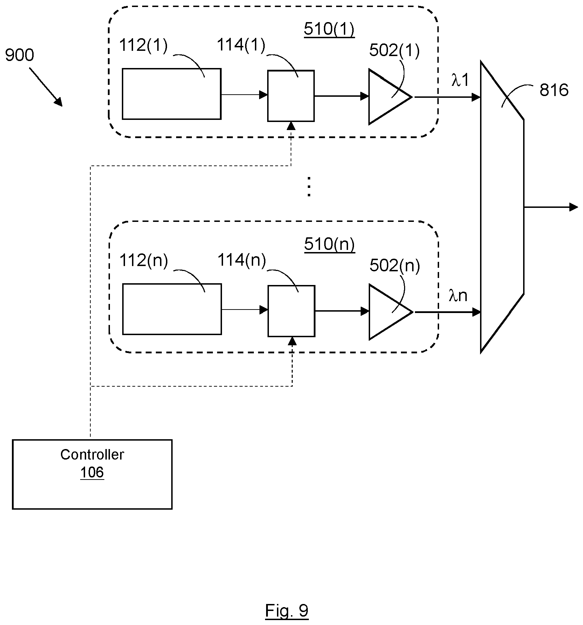

Referring to Figure 9, an embodiment provides a high energy laser processing system 900 comprising a plurality of seed laser apparatus 510(1) to 510(n) configured to output seed laser signals having different wavelengths and having average optical powers in the range 800 Wto 5 kW, optical beam combining apparatus 816 and a controller 106.

Each seed laser apparatus 510(1) to 510(n) is configured to output respective seed laser signals at a different wavelength, λ1 to λn.

The optical beam combining apparatus 816 is spectral beam combining apparatus. The spectral beam combing apparatus may comprise a grating based spectral beam combiner or a dichroic mirror based spectral beam combiner.

The system 900 has respective optical path lengths from the optical modulator 114 of each seed laser apparatus 510 to the spectral beam combining apparatus 816. The optical path length from each optical modulator to the spectral beam combining apparatus 816 is the same to within 50 mm, that is to say the optical path lengths match to within 50 mm.

It will also be understood that a controller 206 as described above may alternatively be used.

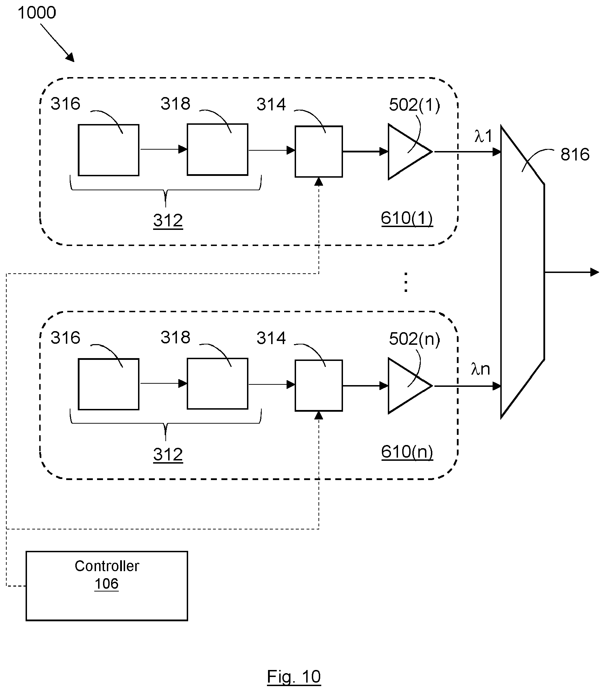

Referring to Figure 10, an embodiment provides a high energy laser processing system 1000 comprising a plurality of seed laser apparatus 610(1) to 610(n) configured to output seed laser signals having different wavelengths and having average optical powers in the range 800 Wto 5 kW, optical beam combining apparatus 816 and a controller 106.

Each seed laser apparatus 610(1) to 610(n) is configured to output respective seed laser signals at a different wavelength, λ1 to λn.

The optical beam combining apparatus 816 is spectral beam combining apparatus. The spectral beam combing apparatus may comprise a grating based spectral beam combiner or a dichroic mirror based spectral beam combiner.

The system 1000 has respective optical path lengths from the optical modulator 314 of each seed laser apparatus 610 to the spectral beam combining apparatus 816. The optical path length from each optical modulator to the spectral beam combining apparatus 816 is the same to within 50 mm, that is to say the optical path lengths match to within 50 mm.

It will also be understood that a controller 206 as described above may alternatively be used.

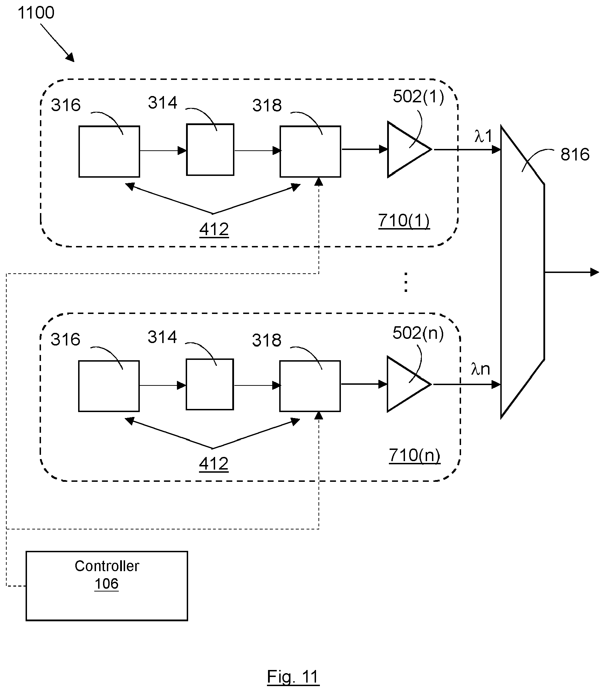

Referring to Figure 11, an embodiment provides a high energy laser processing system 1100 comprising a plurality of seed laser apparatus 710(1) to 710(n) configured to output seed laser signals having different wavelengths and having average optical powers in the range 800 Wto 5 kW, optical beam combining apparatus 816 and a controller 106.

Each seed laser apparatus 710(1) to 710(n) is configured to output respective seed laser signals at a different wavelength, λ1 to λn.

The optical beam combining apparatus 816 is spectral beam combining apparatus. The spectral beam combing apparatus may comprise a grating based spectral beam combiner or a dichroic mirror based spectral beam combiner.

The system 1100 has respective optical path lengths from the optical modulator 314 of each seed laser apparatus 710 to the spectral beam combining apparatus 816. The optical path length from each optical modulator to the spectral beam combining apparatus 816 is the same to within 50 mm, that is to say the optical path lengths match to within 50 mm.

It will also be understood that a controller 206 as described above may alternatively be used.

### Additional Embodiments

1. A high energy laser processing system comprising:
   a plurality of seed laser apparatus configured to output seed laser signals having different wavelengths and having average optical powers in the range 800 W to 5 kW,
   each seed laser apparatus comprising:
      an optical source configured to provide a continuous wave, cw, seed laser signal having a respective wavelength and having a spectral linewidth in the range 15 to 250 GHz; and
      an optical modulator configurable to transmit laser signals without applying amplitude modulation or to apply amplitude modulation to laser signals, the optical modulator having a cw operating mode in which it is configured to transmit the cw seed laser signal and having a pulsed operating mode in which it is configured to apply amplitude modulation to output a pulsed seed laser signal of seed laser pulses;
   optical beam combining apparatus configured to combine cw seed laser signals into a cw combined laser signal and to combine pulsed seed laser signals into a pulsed combined laser signal; and
   a controller operative to transmit at least one control signal configured to cause the optical modulators to switch between operating in the pulsed operating mode and
   operating in the cw operating mode.
2. The system of embodiment 1, wherein each seed laser apparatus additionally comprises at least one optical amplifier configured to amplify seed laser signals to an average optical power in the range 800 Wto 5 kW.
3. The system of embodiment 1 or embodiment 2, wherein the cw combined laser signal has an average optical power of at least 10 kW, such as up to 100 kW.
4. The system of embodiment 2, wherein the optical modulator and the at least one optical amplifier are configured to provide seed laser pulses having a peak pulse energy in the range 0.5 mJ and 10 mJ.
5. The system of embodiment 4, wherein the pulsed combined laser signal has a peak pulse energy of at least 20 mJ, such as up to 100 mJ.
6. The system of any one of embodiments 1 to 5, wherein the optical source comprises a single frequency laser and a phase modulator, wherein the single frequency laser is configured to generate a single frequency cw laser signal having a spectral linewidth of up to 20kHz and the phase modulator is operative to apply phase modulation to increase the spectral linewidth to up to 120 GHz.
7. The system of embodiment 6, wherein the phase modulator is operative to apply phase modulation to the single frequency cw laser signal to increase the spectral linewidth to up to 120 GHz to form a cw seed laser signal, and wherein the optical modulator is provided after the phase modulator and the optical modulator is configured, in the cw operating mode, to transmit the cw seed laser signal without applying amplitude modulation, and the optical modulator is configured, in the pulsed operating mode, to apply amplitude modulation to the cw seed laser signal received from the phase modulator to form a pulsed seed laser signal.
8. The system of embodiment 6, wherein the optical modulator is provided between the single frequency laser and the phase modulator, and wherein the optical modulator is configured, in the cw operating mode, to transmit the single frequency cw laser signal without applying amplitude modulation and the optical modulator is configured, in the pulsed operating mode, to apply amplitude modulation to the single frequency cw laser signal to form a single frequency pulsed laser signal, and the phase modulator is operative to apply phase modulation to increase the spectral linewidth of the single frequency cw laser signal to up to 120 GHz to form a cw seed laser signal, and the phase modulator is further operative to apply phase modulation to increase the spectral linewidth of the single frequency pulsed laser signal to up to 120 GHz to form a pulsed seed laser signal.
9. The system of any one of embodiments 6 to 8, wherein the single frequency cw laser signal has a spectral linewidth of up to 10 kHz, such as up to 1 kHz, such as up to 500 Hz.
10. The system of any one of embodiments 1 to 5, wherein the optical source comprises a grating-based fibre laser oscillator configured to generate a cw seed laser signal having a spectral linewidth of up to 120 GHz.
11. The system of any one of embodiments 1 to 5, wherein the optical source comprises a laser diode configured to generate a cw seed laser signal having a spectral linewidth in the range 15 to 250 GHz.
12. The system of embodiment 9, wherein the laser diode is one of a fibre Bragg grating locked laser diode or a Fabry-Perot laser diode.
13. The system of any one of embodiments 1 to 12, wherein the seed laser pulses are nanosecond pulses.
14. The system of embodiment 13, wherein the seed laser pulses have a pulse duration in the range 1 ns to 2000 ns.
15. The system of embodiment 14, wherein the seed laser pulses have a pulse repetition rate in the range 1 MHz to 100 MHz.
16. The system of any one of embodiments 1 to 15, wherein the optical modulator is a semiconductor optical amplifier.
17. The system of embodiment 16, wherein the semiconductor optical amplifier is additionally configured, in the cw operating mode, to amplify the cw seed laser signal.
18. The system of embodiment 17, wherein the semiconductor optical amplifier is configured to amplify the cw seed laser signal to an optical power of up to 1 W, such as up to 500 mW, such as up to 300 mW, such as up to 200 mW, such as up to 100 mW.
19. The system of any one of embodiments 16 to 18, wherein the semiconductor optical amplifier is additionally configured, in the pulsed operating mode, to amplify the seed laser pulses.
20. The system of embodiment 19, wherein the semiconductor optical amplifier is configured to amplify the seed laser pulses to an average optical power in the range 1 mW to 250 mW.
21. The system of any one of embodiments 1 to 15, wherein the optical modulator is one of an acousto-optic modulator, AOM, an electroabsorption modulator, EAM, a booster optical amplifier, BOA, or an optical switch, such as a micro-electromechanical switch.
22. The system of any one of embodiments 1 to 21, wherein the optical beam combining apparatus is spectral beam combining apparatus and wherein the system has respective optical path lengths from the optical modulator of each seed laser apparatus to the optical beam combining apparatus and the optical path lengths match to within 50 mm.
23. The system of any one of embodiments 1 to 22, wherein the controller comprises interface circuitry, a processor and a memory, the memory containing instructions executable by the processor whereby the controller is operative to transmit the at least one control signal to the optical modulators.
24. The system of embodiment 23, wherein the controller is operative to transmit a first control signal configured to cause the optical modulators to be configured in the pulsed operating mode and to transmit a second control signal configured to cause the optical modulators to be configured in the cw operating mode, and wherein the controller is operative to switch between transmitting the first control signal and the second control signal according to a pre-set switching pattern stored in the memory.
25. The system of embodiment 23, wherein the controller is further operative to transmit the at least one control signal in response to receiving an external trigger signal.
26. The system of any one of embodiments 1 to 25, wherein the controller is further operative to transmit at least one modulation timing control signal configured to cause the optical modulators to synchronously apply amplitude modulation.

## Claims

1. A high energy laser processing system (100, 200, 300, 400, 500, 600, 700, 800, 900, 1000, 1100) comprising:
a plurality of seed laser apparatus (110, 310, 410, 510, 610, 710) configured to output seed laser signals having different wavelengths and having average optical powers in the range 800 Wto 5 kW, each seed laser apparatus comprising:
an optical source (112, 312, 412) configured to provide a continuous wave, cw,
seed laser signal having a respective wavelength and having a spectral linewidth in the range 15 to 250 GHz; and
an optical modulator (114, 314) configurable to transmit laser signals without applying amplitude modulation or to apply amplitude modulation to laser signals,
the optical modulator having a cw operating mode in which it is configured to transmit the cw seed laser signal and having a pulsed operating mode in which it is configured to apply amplitude modulation to output a pulsed seed laser signal
of seed laser pulses;
optical beam combining apparatus (116, 816) configured to combine cw seed laser signals into a cw combined laser signal and to combine pulsed seed laser signals into a pulsed combined laser signal; and
a controller (106, 206) operative to transmit at least one control signal configured to cause the optical modulators to switch between operating in the pulsed operating mode and operating in the cw operating mode.

2. The system of claim 1, wherein each seed laser apparatus (510, 610) additionally comprises at least one optical amplifier (502) configured to amplify seed laser signals to an average optical power in the range 800 Wto 5 kW.

3. The system of claim 1 or claim 2, wherein the cw combined laser signal has an average optical power of at least 10 kW, such as up to 100 kW.

4. The system of claim 2, wherein the optical modulator (314) and the at least one optical amplifier (502) are configured to provide seed laser pulses having a peak pulse energy in the range 0.5 mJ and 10 mJ.

5. The system of claim 4, wherein the pulsed combined laser signal has a peak pulse energy of at least 20 mJ, such as up to 100 mJ.

6. The system of any one of claims 1 to 5, wherein the optical source (312, 412) comprises a single frequency laser (316) and a phase modulator (318), wherein the single frequency laser is configured to generate a single frequency cw laser signal having a spectral linewidth of up to 20kHz and the phase modulator is operative to apply phase modulation to increase the spectral linewidth to up to 120 GHz.

7. The system of claim 6, wherein the phase modulator (318) is operative to apply phase modulation to the single frequency cw laser signal to increase the spectral linewidth to up to 120 GHz to form a cw seed laser signal, and wherein the optical modulator (314) is provided after the phase modulator and the optical modulator is configured, in the cw operating mode, to transmit the cw seed laser signal without applying amplitude modulation and the optical modulator is configured, in the pulsed operating mode, to apply amplitude modulation to the cw seed laser signal received from the phase modulator to form a pulsed seed laser signal.

8. The system of claim 6, wherein the optical modulator (314) is provided between the single frequency laser (316) and the phase modulator (318), and wherein the optical modulator is configured, in the cw operating mode, to transmit the single frequency cw laser signal without applying amplitude modulation and the optical modulator is configured, in the pulsed operating mode, to apply amplitude modulation to the single frequency cw laser signal to form a single frequency pulsed laser signal, and the phase modulator is operative to apply phase modulation to increase the spectral linewidth of the single frequency cw laser signal to up to 120 GHz to form a cw seed laser signal, and the phase modulator is further operative to apply phase modulation to increase the spectral linewidth of the single frequency pulsed laser signal to up to 120 GHz to form a pulsed seed laser signal.

9. The system of any one of claims 6 to 8, wherein the single frequency cw laser signal has a spectral linewidth of up to 10 kHz, such as up to 1 kHz, such as up to 500 Hz.

10. The system of any one of claims 1 to 5, wherein the optical source (112) comprises one of: a grating-based fibre laser oscillator configured to generate a cw seed laser signal having a spectral linewidth of up to 120 GHz; and a laser diode configured to generate a cw seed laser signal having a spectral linewidth in the range 15 to 250 GHz.

11. The system of any one of claims 1 to 10, wherein the optical modulator (114, 314) is a semiconductor optical amplifier.

12. The system of claim 11, wherein the semiconductor optical amplifier is additionally configured, in the cw operating mode, to amplify the cw seed laser signal to an optical power of up to 1 W, such as up to 500 mW, such as up to 300 mW, such as up to 200 mW, such as up to 100 mW.

13. The system of any one of claims 11 to 12, wherein the semiconductor optical amplifier is additionally configured, in the pulsed operating mode, to amplify the seed laser pulses to an average optical power in the range 1 mW to 250 mW.

14. The system of any one of claims 1 to 10, wherein the optical modulator (114, 314) is one of an acousto-optic modulator, AOM, an electroabsorption modulator, EAM, a booster optical amplifier, BOA, or an optical switch, such as a micro-electromechanical switch.

15. The system of any one of claims 1 to 14, wherein the optical beam combining apparatus (816) is spectral beam combining apparatus and wherein the system has respective optical path lengths from the optical modulator of each seed laser apparatus to the optical beam combining apparatus and the optical path lengths match to within 50 mm.

16. The system of claim 15, wherein the controller (106, 206) is operative to transmit a first control signal configured to cause the optical modulators to be configured in the pulsed operating mode and to transmit a second control signal configured to cause the optical modulators to be configured in the cw operating mode, and wherein the controller is operative to switch between transmitting the first control signal and the second control signal according to a pre-set switching pattern stored in the memory.
